# EUROPÄISCHE PATENTANMELDUNG

(11) **EP 1 313 303 A2**
(43) Veröffentlichungstag der Anmeldung: **21.05.2003**
(21) Anmeldenummer: 02025739.0
(22) Anmeldetag: 15.11.2002
(51) Int. Cl.: H04M 11/02, H04M 3/42

(54) **Kommunikationsendgerät und Kommunikationssystem**

(30) Priorität: 16.11.2001 DE 10156360; 14.12.2001 DE 10161559
(71) Anmelder: Tenovis GmbH & Co. KG, 60326 Frankfurt (DE)
(72) Erfinder: Döbold, Herbert, 59769 Köln (DE); Drehsen, Axel, 53844 Troisdorf (DE); Hüllenhütter, Hans-Günther, 50997 Köln (DE); Prüter, Dirk, 51143 Köln (DE); Schmitz, Werner, 50827 Köln (DE)
(74) Vertreter: Heinze, Ekkehard, Dipl.-Phys. Dr.

(57) **Zusammenfassung**

Kommunikationsendgerät (11) eines Klinik-Kommunikationssystems (1), in Ausbildung als integriertes digitales Endgerät für Telefonie, Lichtruf und Steuerungsaufgaben.

## Beschreibung

Die Erfindung betrifft ein Kommunikationsendgerät eines Kommunikationssystems, wie es in Kliniken, Seniorenheimen oder Reha-Kliniken eingesetzt wird, sowie ein derartiges System als solches.

Derartige Kommunikationssysteme müssen - im Vergleich zu Telefonanlagen in Firmen oder öffentlichen Einrichtungen oder im privaten Bereich einerseits und zu industriellen Fernmelde- und Fernwirksystemen andererseits - besonderen Anforderungen gerecht werden. Ein traditionell besonders wichtiger Aspekt ist die Realisierung von Notrufen bzw. Bedürfnismeldungen der Patienten oder betreuten Personen an das Pflege- bzw. Überwachungspersonal, die auch schwerkranken oder behinderten Personen möglich sein und daher besonders einfach gestaltet werden muß. Zunehmend wichtig wird auch der Komfortaspekt, d. h. die Möglichkeit einer Steuerung verschiedener technischer Einrichtungen (TV, Radioanlage, Beleuchtung ...) im Raum. In Zusammenhang mit dem zunehmenden Einsatz moderner Zugriffssteuersysteme (etwa über Chipkarte oder SmartCard) ist auch die Anforderung entstanden, daß ein solches Kommunikationssystem die Eingabe und Verarbeitung von Authentisierungsdaten ermöglichen soll.

In Kliniken werden seit langem Notrufsysteme eingesetzt, die es dem Patienten auf leichte und schnelle Weise ermöglichen, sich beim Überwachungs- bzw. Pflegepersonal (beispielsweise der Stationsschwester) zu melden, um auf eine problematische Situation hinzuweisen oder aus anderen Gründen Hilfe anzufordern. Derartige Systeme sind traditionell so ausgeführt, daß der Patientenruf ein Lichtsignal an der Zimmertür aktiviert, welches dem Betreuungspersonal auf den ersten Blick die Erkennung des Ursprungsortes des Rufes ermöglicht. Sie werden daher auch als Lichtrufsysteme bezeichnet - auch wenn bei modernen Systemen dieser Art die Erzeugung des besagten Lichtsignals längst nicht mehr der entscheidende Funktionsaspekt ist.

In der klassischen Ausführung ist das "Patientenendgerät" durch einen einfachen Taster gebildet, der über dem Krankenhausbett angebracht ist. Durch das Lichtsignal (Aufleuchten einer Lampe an der Zimmertür) wird bei älteren Systemen die Schwester zuerst einmal an das Bett des Patienten gerufen, um dort von diesem zu hören, warum er gerufen hat. Sie kann dort beispielsweise erfahren, daß der Patient Durst hat und Tee verlangt. Um diesen zu holen, muß sie dann gegebenenfalls wieder ans andere Ende des Klinikflurs zur Teeküche eilen. Hätte sie bereits vorher gewußt, was der Patient braucht oder wie dringend die Anfrage ist, hätte sie den Tee bereits mitgenommen, unterwegs andere, dringendere Pflegearbeiten verrichtet oder-einfach die Lernschwester in die Teeküche und zum Patienten geschickt.

Zur Rationalisierung der Arbeitsabläufe in den Kliniken wird daher bereits seit längerem an der Bereitstellung komfortablerer Lichtrufsysteme gearbeitet, die einen Informationsaustausch zwischen Patient und Pflegepersonal ermöglichen. Hierzu gehören zum einen übersichtliche Bildschirmdarstellungen eingehender Rufe auf dem PC und zum anderen zusätzliche Sprechverbindungen.

Bei bekannten, marktgängigen Lichtrufsystemen wird, um derartige Sprechverbindungen zu ermöglichen, eine eigene Kommunikations-Infrastruktur des Lichtrufsystems erstellt. Infolge ihrer historischen Bedingtheiten kann diese Infrastruktur die heute üblichen Leistungsmerkmale moderner Telekommunikationssysteme nur unzureichend verwirklichen. Hinzu kommt, daß die Ansprüche der Patienten an die Lebensqualität in der Klinik ständig gestiegen sind und die Kliniken natürlich versuchen, den gestiegenen Bedürfnissen beispielsweise durch Bereitstellung komfortabler TK-Endgeräte am Patientenbett Rechnung zu tragen. Dies hat dazu geführt, daß in der Praxis verschiedene Endgeräte am Bett des Patienten nebeneinander genutzt werden.

Im Hinblick auf die vielfach eingeschränkten Wahrnehmungs- und Reaktionsmöglichkeiten Kranker ist dies ebenso problematisch wie die Endgeräteintegration verschiedener Systeme, mit denen Sprechverbindungen möglich sind. Eine Mehrzahl von Geräten korrekt zu bedienen, überfordert die Patienten oft ebenso wie die richtige Bedienung eines integrierten Endgerätes mit großer Funktionsvielfalt. Zudem ist auch bei Lösungen, bei denen die Sprachkomponente eines Lichtrufanbieters in ein TK-Endgerät integriert wurde oder umgekehrt, nach den Erkenntnissen der Erfinder kein an Klinikanforderungen angepaßter Funktionsumfang und Bedienkomfort erreicht worden.

Bekannte Schnittstellen zwischen Lichtrufsystemen und TK-Anlagen werden heutigen Anforderungen und den erweiterten Leistungsmerkmalen moderner TK-Anlagen nicht mehr gerecht. Ihr technologischer Stand entspricht dem der 80er Jahre; es handelt sich um ESPA-V24-Punkt-zu-Punkt-Verbindungen, die insbesondere an die Textübertragung via Pager angepaßt sind. Die Übertragung ist ungesichert und ermöglicht bei Standard-Pagern keine Rückmeldung. Leistungsmerkmale digitaler TK-Anlagen und von mit modernen Displays ausgestatteten Endgeräten werden ebenso wenig berücksichtigt wie der Einsatz von Mobiltelefonen als Endgeräte.

Der Erfindung liegt daher die Aufgabe der Bereitstellung eines verbesserten Kommunikationsendgerätes und -systems der gattungsgemäßen Art zugrunde, welches in allen Anwendungssituationen eine einfache und zuverlässige Kommunikation zwischen Patient und Betreuungspersonal und zugleich eine Kommunikation nach extern und zudem die Steuerung zusätzlicher Abläufe bzw. technischer Geräte ermöglicht.

Diese Aufgabe wird einerseits durch ein Kommunikationsendgerät mit den Merkmalen des Anspruchs 1 und andererseits durch ein Kommunikationssystem mit den Merkmalen des Anspruchs 8 gelöst.

Das im Zimmer der betreuten Person bzw. dem Krankenzimmer vorgesehene Gerät wird im folgenden auch als Patienten-Bedienkombination (PBK) bezeichnet, da es neben Kommunikations- auch Bedienfunktionen realisiert. Es handelt sich - insbesondere für den Einsatz im europäischen Raum - zweckmäßigerweise um ein ISDN-Endgerät zum Anschluß an eine ISDN-Nebenstellenanlage, welche eine wesentliche Komponente des vorgeschlagenen Systems darstellt, oder ein IP-Endgerät zum Anschluß an ein IP-Netz.

Mit der vorgeschlagenen Lösung werden die Grundlagen für eine gesicherte Textübertragung von Notrufmeldungen zu Mobil- und Festnetz-Endgeräten (zu Einzelzielen oder verknüpften Gruppenzielen, einschließlich Routing zu unterschiedlichen lokalen und externen Endgeräten und Unterstützung von Diensten wie SMS) gelegt. Das vorgeschlagene System ermöglicht qualifizierte, benutzerinitiierte Rückmeldungen an das Lichtrufsystem ebenso wie die Realisierung steuerbarer Sprechverbindungen zwischen TKund LR-Endgerät (insbesondere ein komfortables "Bettsprechen") und die Realisierung von Datendiensten aufgrund patientenbezogener Aufenthaltsdaten.

In einer bevorzugten Ausführung ist das Kommunikationsendgerät bzw. die PBK mit Authentisierungs-Eingabemitteln zur Zugriffssteuerung auf das Kommunikationssystem, insbesondere einer Chipkarten- oder SmartCard-Leseeinrichtung oder auch Lese- und Schreibeinrichtung ausgestattet. Dies ermöglicht insbesondere im Klinikeinsatz die einfache An-, Ab- und Ummeldung von Patienten mit deren Krankenversicherungskarte. Eine solche Lösung kann aber auch im Bereich des betreuten Wohnens oder bei Seniorenheimen im Zusammenhang mit entsprechenden Türschließsystemen sinnvoll sein.

In weiteren bevorzugten Ausführungen umfaßt das Kommunikationsendgerät Steuermittel zur TV- und/oder Audioanlagensteuerung bzw. Steuermittel zur Ein-/Aus-Steuerung und wahlweise Leistungssteuerung einer Beleuchtungseinrichtung. Der Patient bzw. Bewohner hat somit die Möglichkeit, mit einer einzigen Bedieneinheit nicht nur die Kommunikation mit dem Betreuungspersonal, sondern auch die Steuerung der wesentlichen technischen Geräte in seinem Umfeld zu bewerkstelligen. Das Vorhandensein und die Nutzung einer einzigen Bedieneinheit ist gerade für ältere oder kranke Menschen insofern vorteilhaft gegenüber dem Einsatz mehrerer verschiedener Kommunikations- und Bedienterminals, als Verwechslungen weitgehend ausgeschlossen sind.

In einer weiteren bevorzugten Ausführung sind beim Kommunikationsendgerät eine integrierte Freisprecheinrichtung, welche aus dem Kommunikationssystem heraus fernsteuerbar ist, und/oder eine Anzeigeeinrichtung und dieser zugeordnete Anzeigesteuermittel zur optischen Ausgabe von entfernt im Kommunikationssystem eingegebenen Textnachrichten vorgesehen. Die Fernsteuerung kann insbesondere durch das vom Patienten per Lichtruf benachrichtigte Bedienpersonal über die Anlage erfolgen, und durch dieses können auch Textnachrichten eingegeben oder aus einem Textspeicher abgerufen werden, die dem Patienten angezeigt werden sollen.

Kommunikationstechnisches Kernstück des vorgeschlagenen Systems ist eine moderne digitale Telekommunikationsanlage- insbesondere eine ISDN- oder IP-basierte PABX -, welche über User-User-Information im DSS1-Protokoll einen Datentransportmechanismus zwischen dem Kommunikationsendgerät und dem Steuerungs-Server zur Verfügung stellt. Das datentechnische Kernstück des Systems ist hingegen ein Steuerungs-Server (MEDCOM Server). Um hierfür weitgehend standardisierte Produkte einsetzen zu können, umfaßt das Kommunikationssystem zweckmäßigerweise außerdem einen zwischen die Telekommunikationsanlage und den Steuerungs-Server geschalteten Anpassungs-Server zur Protokollanpassung zwischen beiden.

In der, wie oben erwähnt, bevorzugten Ausführung des Systems mit einer ISDN-PABX und einer Mehrzahl von ISDN-PBK in den Patientenzimmern bzw. Wohnräumen weist der Anpassungs-Server zur Verbindung mit der Telekommunikationsanlage mehrere B- bzw. D-Kanäle auf und nutzt ein ISDN-Standardprotokoll und zur Verbindung mit dem Steuerungs-Server ein proprietäres Inband-Protokoll. Der Anpassungs-Server ist insbesondere zur Übertragung transparenter Daten in Datenfeldern beliebiger Länge von der Telekommunikationsanlage zum Steuerungs-Server und vom Steuerungs-Server zur Telekommunikationsanlage, letzteres im synchronen sowie asynchronen Modus, ausgebildet. Dies ermöglicht in einer Richtung beispielsweise die Übermittlung der aus einer Chipkarte bzw. SmartCard ausgelesenen Authentisierudgsdaten und in der anderen Richtung die Übertragung von Initialisierungs- bzw. Steuerdatensätzen, beispielsweise für eine TV- oder Audioanlage. Im letztgenannten Kontext ist der Anpassungs-Server zur Steuerung einer zentralen Einspeisung von TV- bzw. Audiosignalen über einen B-Kanal zum Kommunikationsendgerät ausgebildet.

Das Kommunikationssystem umfaßt desweiteren bevorzugt eine aktive Wanddose als Schnittstelle mit Steuerungsfunktion zwischen dem Kommunikationsendgerät und zu steuernden technischen Einrichtungen im Raum, insbesondere einem TV-Gerät, einer ELA-Switch, Lichtruf- und Beleuchtungsanschlüssen, sowie als Eingangsschnittstelle, insbesondere mit Optokoppler, zur Signalisierung an den Steuerungs-Server.

Schließlich gehört zum System (mindestens) ein Überwachungs-Endgerät oder ein entsprechender Systemanschluß für das Stationszimmer oder einen Überwachungsraum, über das das Pflegepersonal vor allem Sprechverbindungen mit den Patienten bzw. Bewohner aufnehmen und steuern bzw. Textmitteilungen an diese verschicken kann.

Vorteile und Zweckmäßigkeiten der Erfindung ergeben sich im übrigen aus den Unteransprüchen sowie der nachfolgenden Beschreibung eines bevorzugten Ausführungsbeispiels anhand der Figuren. Von diesen zeigen:
- Fig. 1: eine Prinzipskizze des Gesamtaufbaus einer Ausführungsform des vorgeschlagenen Kommunikationssystems,
- Fig. 2: eine Darstellung zum Meldungsablauf der User-User-Signalisierung zwischen einem Kommunikationsendgerät und dem Steuerungs-Server über die Nebenstellenanlage bei einem System gemäß Fig. 1,
- Fig. 3: eine Darstellung zum Timing der Kommunikation zwischen den einzelnen Komponenten bei dem Kommunikationssystem nach Fig. 1,
- Fig. 4: ein Diagramm zum Ablauf der Signalisierung bei einer Datenübertragung vom Steuerungs-Server zum Kommunikationsendgerät,
- Fig. 5: eine Darstellung zu einer möglichen Implementierung eines "Headers" für die Kommunikationsebene PBK/BCS bei dem Kommunikationssystem nach Fig. 1 und
- Fig. 6: eine Darstellung zur Beschreibung der Schnittstellenfunktion der aktiven Wanddose 13 des Systems nach Fig. 1.

Das als Beispiel dargestellte Kommunikationssystem 1 hat als Kernstück eine digitale automatische Nebenstellenanlage 3, die zum einen die Patientenzimmer mit den Räumen des Überwachungs- bzw. Pflegepersonals und zum anderen mit einem Steuerungs-Server (MEDCOM Server) 5 verbindet. Die Ausstattung der Patientenzimmer umfaßt einen Lichtrufgeber 7, ein TV-Gerät 9 und ein Kommunikationsendgerät (ISDN-PBK) 11, die sämtlich an eine aktive Wanddose (AWD) 13 angeschlossen sind. Über diese ist also die gesamte Geräteausstattung der Patientenzimmer mit der Nebenstellenanlage 3 verbunden. Der Steuerungs-Server 5 ist über einen Anpassungs-Server (BCS = Branch Communications Server) 15 mit der Nebenstellenanlage verbunden. Die Nebenstellenanlage verbindet die Patientenzimmer sowohl mit dem Amt 17 als auch mit dem Überwachungs- bzw. Pflegepersonal, wo sich mindestens ein PC 19 und ein zur Überwachung der Lichtruffunktionen und direkten Kommunikation mit den Patienten dienendes Überwachungs-Endgerät 21 befinden.

In der Anlage 3 ist zudem eine Steuerungssoftware 23 für das Leistungsmerkmal "Bettsprechen" implementiert, und eingangsseitig ist die Anlage zudem mit einer zentralen Toneinspeisung 25 verbunden, über die wahlweise verschiedene NF-Quellen (1) bis (n) über die TK-Anlage 3 in das Patientenzimmer geschaltet werden können. Die zentrale Toneinspeisung 25 ist über eine Steuersignalleitung mit dem Steuerungs-Server 5 und über eine Tonsignalleitung, über die komprimierte oder unkomprimierte Tonsignale übertragen werden, mit der TK-Anlage 3 verbunden. Zur Tonwiedergabe im Patientenzimmer - insbesondere auch des Fernsehtones - ist das Kommunikationsendgerät 11 (optional) mit einem Kopfhörer 27 ausgestattet. Diese Art der Tonversorgung der Patientenzimmer erfordert eine bedeutend weniger aufwendige Verkabelung und ist daher höchst wirtschaftlich und erleichtert zudem bei Mehrbettzimmern die Zuordnung der Kosten für die Nutzung des TV-Gerätes 9 zu den einzelnen Patienten.

Die Nebenstellenanlage 3 steuert die Telefonie-Leistungsmerkmale der Kommunikationsendgeräte (ISDN-PBK) 11 im "functional mode" und stellt über User-User-Information im DSS1-Protokoll einen Datentransportmechanismus zwischen den ISDN-PBK und dem Steuerungsserver (MEDCOM Server) 5 zur Verfügung. Eine Voraussetzung hierfür ist, daß die End-to-End-Verbindung immer mit B-Kanal-Belegung erfolgt. Zur Realisierung von Meldungen in Richtung Endgerät-Server muß im Endgerät eine Rufnummer des Servers gespeichert sein.

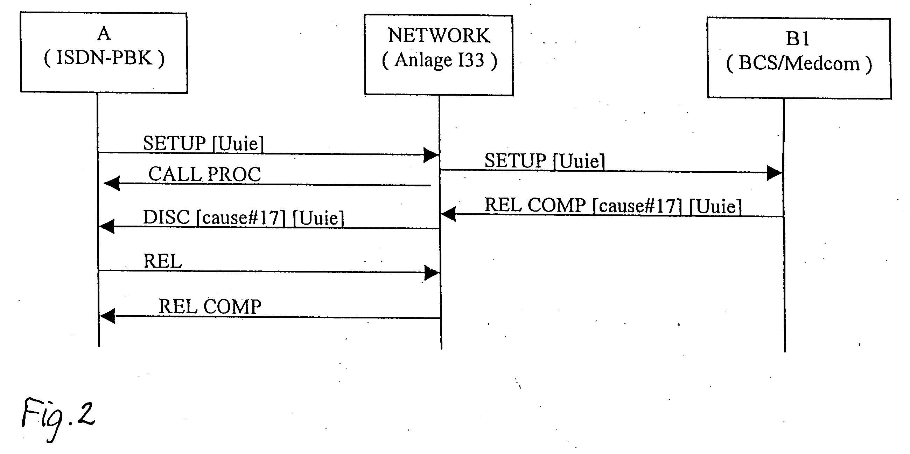

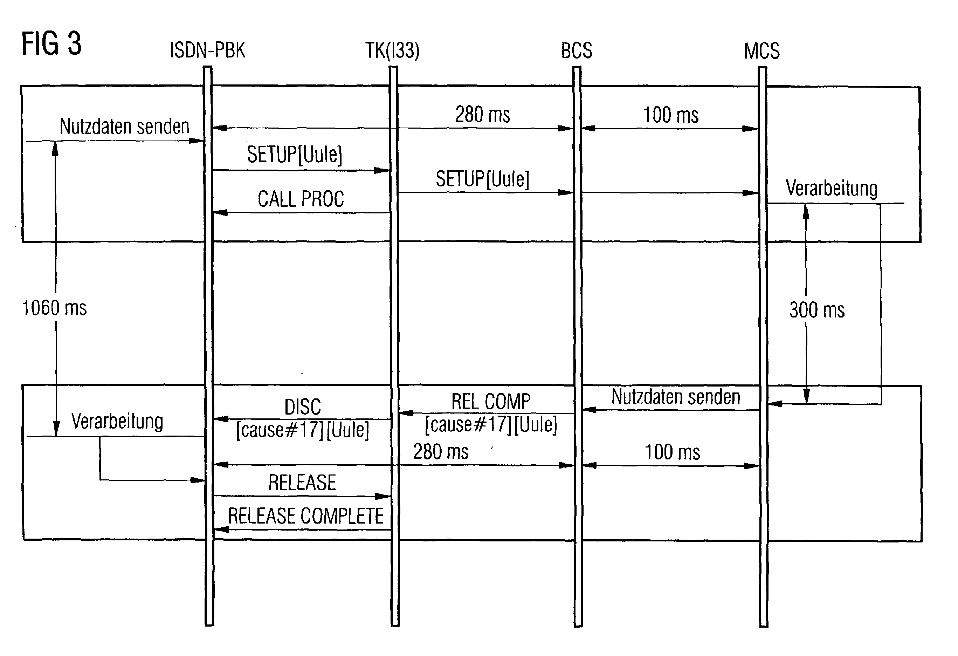

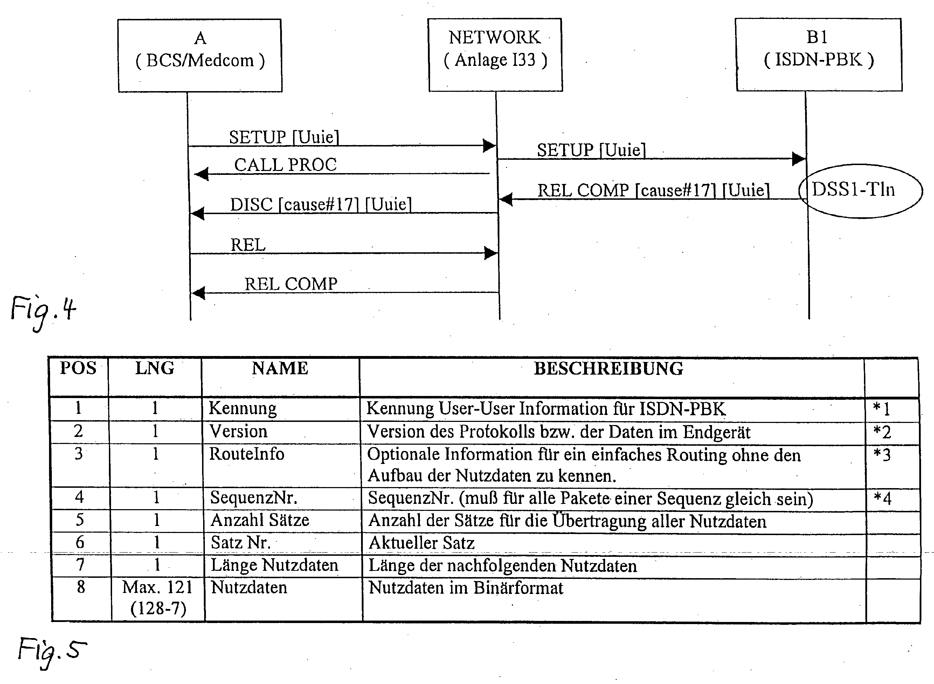

In Fig. 2 ist ein Meldungsablauf der User-User-Signalisierung (Auszug aus EN 330 286-1 v1.2.4 Annex A.10 - Premature clearing initiated by the called user) dargestellt. In Fig. 3 ist das allgemeine Zeitverhalten bezüglich der Kommunikation zwischen den einzelnen Komponenten veranschaulicht. Fig. 4 zeigt - in analoger Darstellung zu Fig. 2 - den Ablauf der Datenübertragung in Richtung Server-Endgerät.

Innerhalb der User-User-Informationselemente im Setup oder Release wird aus der Nutzinformation im B-Kanal ein inneres Protokoll mit proprietärem Charakter definiert. Die Tabelle in Fig. 5 stellt einen Implementierungsvorschlag eines "Headers" für die Kommunikationsebene PBK/BCS dar. Durch eine Routinginformation im Header des Datensatzes können Datenpakete direkt an den korrekten Empfänger geroutet werden. Falls die Übertragung von Nutzdaten in Aufteilung auf mehrere Datenpakete ausgeführt werden muß, müssen alle Pakete dieser Sequenz dieselbe Sequenznummer erhalten.

Der Steuerungs-Server realisiert insbesondere die oben erwähnten Funktionen des Anmeldens, Abmeldens und "Umzugs" des Patienten, wobei dieser die entsprechenden Bedienungen an seinem Kommunikationsendgerät durch Stecken bzw. Ziehen seiner Chipkarte ausführt. Der Server steuert zudem das TV-Gerät bzw. Radio im Zimmer des Patienten oder Bewohners bzw. den TV-/Radio-Ton in der Telekommunikationsanlage bei Verwendung einer zentralen Toneinspeisung, hat Service- und Administrationsaufgaben, z. B. für Geräteeinstellung im Zimmer des Patienten, und übernimmt schließlich den Upload von patientenindividuellen Einstellungen, die am Kommunikationsendgerät vorgenommen wurden, in das System.

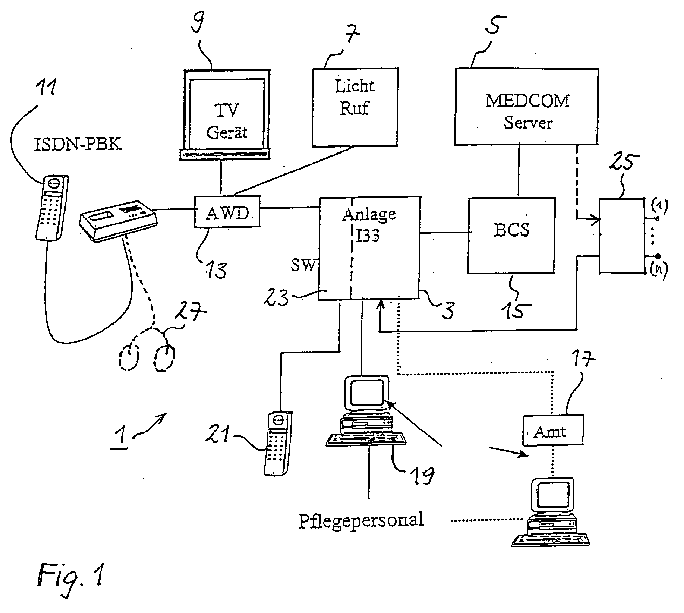

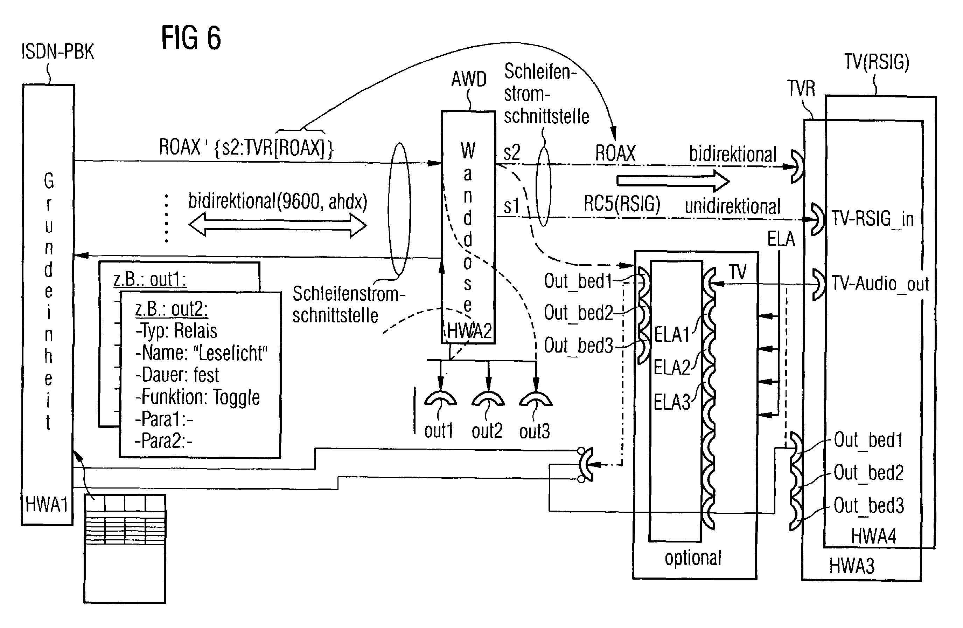

In Fig. 6 sind die Schnittstellenfunktionen einer aktiven Wanddose 13 aus Fig. 1 skizzenartig zusammengestellt. Diese stellt ein Bindeglied zwischen dem Kommunikationsendgerät (der PBK) und anderen technischen Einrichtungen im Krankenzimmer, insbesondere dem TV-Gerät, einer ELA-Einrichtung oder einer Relaissteuerung für Jalousien etc., dar. Die serielle Schnittstelle zwischen der ISDN-PBK und der AWD ist eine bidirektionale Schleifenstromschnittstelle im Halbduplexbetrieb. Zur Steuerung der Wandeinheiten wird ein serielles Steuerprotokoll zugrundegelegt; für die benötigten Steuerfunktionen von Nicht-TVR-Einrichtungen ist dieses zu erweitern.

Die Ausführung der Erfindung ist nicht auf das oben beschriebene Beispiel beschränkt, sondern ebenso in einer Vielzahl von Abwandlungen möglich, die im Rahmen fachgemäßen Handelns liegen.

### Bezugszeichenliste

- 1: Kommunikationssystem
- 3: Nebenstellenanlage
- 5: Steuerungs-Server
- 7: Lichtrufgeber
- 9: TV-Gerät
- 11: Kommunikationsendgerät (ISDN-PBK)
- 13: AWD
- 15: Anpassungs-Server
- 17: Amt
- 19: PC
- 21: Überwachungs-Endgerät
- 23: Steuerungssoftware "Bettsprechen"
- 25: zentrale Toneinspeisung
- 27: Kopfhörer

## Patentansprüche

1. Kommunikationsendgerät (11) eines Klinik-Kommunikationssystems (1),
**gekennzeichnet durch**
die Ausbildung als integriertes digitales Endgerät für Telefonie, Lichtruf und Steuerungsaufgaben.

2. Kommunikationsendgerät nach Anspruch 1,
**gekennzeichnet durch**,
die Ausbildung als Endgerät mit getrennten Signalisierungs- und Sprachkanälen, insbesondere ISDN- oder IP-Endgerät.

3. Kommunikationsendgerät nach Anspruch 1 oder 2,
**gekennzeichnet durch**
Authentisierungs-Eingabemittel zur Zugriffssteuerung auf das Kommunikationssystem, insbesondere eine Chipkartenoder SmartCard-Leseeinrichtung, umfassen.

4. Kommunikationsendgerät nach einem der vorangehenden Ansprüche,
**gekennzeichnet durch**
Steuermittel zur TV- und/oder Audioanlagensteuerung.

5. Kommunikationsendgerät nach einem der vorangehenden Ansprüche,
**gekennzeichnet durch**
Steuermittel zur Ein-/Aus-Steuerung und wahlweise Leistungssteuerung einer Beleuchtungseinrichtung.

6. Kommunikationsendgerät nach einem der vorangehenden Ansprüche,
**gekennzeichnet durch**
eine integrierte Freisprecheinrichtung, welche aus dem Kommunikationssystem heraus fernsteuerbar ist.

7. Kommunikationsendgerät nach einem der vorangehenden Ansprüche,
**gekennzeichnet durch**
eine Anzeigeeinrichtung und dieser zugeordnete Anzeigesteuermittel zur optischen Ausgabe von entfernt im Kommunikationssystem eingegebenen Textnachrichten.

8. Kommunikationsendgerät nach einem der vorangehenden Ansprüche,
**gekennzeichnet durch**
mindestens einen Kopfhöreranschluß zum Anschluß eines Kopfhörers (27), insbesondere zur Wiedergabe des Tonsignals eines TV-Gerätes (9).

9. Kommunikationssystem (1), insbesondere zum Einsatz in einer Klinik, einem Seniorenheim oder einer Reha-Klinik, mit einer Mehrzahl von Kommunikationsendgeräten (11) nach einem der vorangehenden Ansprüche, einem Steuerungs-Server (5) zur Ausführung der durch Eingabe von Steuerbefehlen an den Kommunikationsendgeräten ausgelösten Steuerungsaufgaben und einer die Kommunikationsendgeräte mit dem Steuerungs-Server verbindenden Telekommunikationsanlage (3).

10. Kommunikationssystem nach Anspruch 9,
**dadurch gekennzeichnet, daß**
die Telekommunikationsanlage als automatische ISDN-Nebenstellenanlage (3) ausgebildet ist.

11. Kommunikationssystem nach Anspruch 9 oder 10,
**dadurch gekennzeichnet, daß**
die Telekommunikationsanlage über User-User-Information im DSS1-Protokoll oder IP-Übertragung einen Datentransportmechanismus zwischen dem Kommunikationsendgerät (11) und dem Steuerungs-Server (5) zur Verfügung stellt.

12. Kommunikationssystem nach einem der Ansprüche 9 bis 11,
**gekennzeichnet durch**
einen zwischen die Telekommunikationsanlage (3) und den Steuerungs-Server (5) geschalteten Anpassungs-Server (15) zur Protokollanpassung zwischen beiden.

13. Kommunikationssystem nach Anspruch 12,
**dadurch gekennzeichnet, daß**
der Anpassungs-Server (15) zur Verbindung mit der Telekommunikationsanlage mehrere B-Kanäle aufweist und ein ISDN-Standardprotokoll und zur Verbindung mit dem Steuerungs-Server (5) ein Inband-Protokoll nutzt.

14. Kommunikationssystem nach Anspruch 12 oder 13,
**dadurch gekennzeichnet, daß**
der Anpassungs-Server (15) zur Übertragung transparenter Daten in Datenfeldern beliebiger Länge von der Telekommunikationsanlage (11) zum Steuerungs-Server und vom Steuerungs-Server (5) zur Telekommunikationsanlage, letzteres im synchronen sowie asynchronen Modus, ausgebildet ist.

15. Kommunikationssystem nach einem der Ansprüche 12 bis 14,
**dadurch gekennzeichnet, daß**
der Anpassungs-Server (15) zur Steuerung einer zentralen Einspeisung von TV- bzw. Audiosignalen über einen B-Kanal zum Kommunikationsendgerät (11) ausgebildet ist.

16. Kommunikationssystem nach einem der Ansprüche 9 bis 15,
**gekennzeichnet durch**
eine aktive Wanddose (13) als Schnittstelle mit Steuerungsfunktion zwischen dem Kommunikationsendgerät (11) und zu steuernden technischen Einrichtungen im Raum, insbesondere einem TV-Gerät (9), einer ELA-Switch, Lichtruf- und Beleuchtungsanschlüssen, sowie als Eingangsschnittstelle, insbesondere mit Optokoppler, zur Signalisierung an den Steuerungs-Server (5).

17. Kommunikationssystem nach einem der Ansprüche 9 bis 16,
**gekennzeichnet durch**
ein an die Telekommunikationsanlage angeschlossenes Überwachungs-Endgerät (19, 21), welches zur Fernsteuerung von Funktionen der Kommunikationsendgeräte, insbesondere von Freisprecheinrichtungen oder Anzeigesteuereinrichtungen derselben, ausgebildet ist.

18. Kommunikationssystem nach einem der Ansprüche 9 bis 17,
**gekennzeichnet durch**
eine mit einem Eingang der Telekommunikationsanlage (3) verbundene zentrale Toneinspeisung (25) zur Verbindung verschiedener NF-Quellen mit dem Kommunikationsendgerät (11) zur Tonwiedergabe über einen Audioausgang desselben, insbesondere einen an dieses angeschlossenen Kopfhörer (27).
